(19) Europäisches Patentamt
European Patent Office
Office européen des brevets

(11) **EP 3 518 130 A1**

(12) **EUROPEAN PATENT APPLICATION**

(43) Date of publication:
**31.07.2019 Bulletin 2019/31**

(51) Int Cl.:
**G06F 21/36** (2013.01)

(21) Application number: **18154061.8**

(22) Date of filing: **30.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **OneVisage SA**
**1003 Lausanne (CH)**

(72) Inventors:
• **Remillet, Christophe**
  **1002 Lausanne (CH)**
• **Blumer, Clemens**
  **4053 Bâle (CH)**

(74) Representative: **P&TS SA (AG, Ltd.)**
**Av. J.-J. Rousseau 4**
**P.O. Box 2848**
**2001 Neuchâtel (CH)**

(54) **METHOD AND SYSTEM FOR 3D GRAPHICAL AUTHENTICATION ON ELECTRONIC DEVICES**

(57) The invention concerns a three-dimensional graphical authentication method for verifying the identity of a user through an electronic device having a graphical display, comprising the steps of:
- receiving an authentication request,
- displaying a three-dimensional virtual world containing a plurality of virtual objects by using scene graph with geometry instancing and low poly graphics,
- navigating in the three-dimensional virtual world by using a rotatable and scalable scene view,
- selecting one or plural virtual objects and/or performing pre-defined virtual object actions to form a 3D password made of unique identifiers that correspond to the pre-defined virtual objects and/or actions in the scene graph,
- determining if the formed 3D password matches a 3D password defined at a previous enrolment phase; and
- granting the resource access to the user in case of 3D password matching or rejecting the resource access to the user in case of matching failure.

```
                            ┌─────────────────────────────────┐
                            │ receiving an authentication      │──── 210
                            │ request or launching an          │
                            │ application to login             │
                            └─────────────────────────────────┘
                                            │
                            ┌─────────────────────────────────┐
                            │ displaying one or a plurality of │──── 221
                            │ selectable virtual worlds,       │
                            │ optionally displaying one or a   │
                            │ plurality of selectable sub-worlds│
                            └─────────────────────────────────┘
                                            │
                            ┌─────────────────────────────────┐
                            │ selecting and/or performing an   │──── 222
                            │ action with one or a plurality   │
                            │ of virtual objects that          │
                            │ constitute the secret in one or  │
                            │ a plurality of virtual worlds or │
                            │ sub-worlds                       │
                            └─────────────────────────────────┘
                                            │
                            ┌─────────────────────────────────┐
                            │ analyzing the selected virtual   │──── 223
                            │ items and checking if they match │
                            │ the user's secret                │
                            └─────────────────────────────────┘
```

Fig.2

EP 3 518 130 A1

## Description

Field of the invention

The invention relates to a method and a system that verifies the identity of a user in possession of an electronic device by asking her a secret that is made of one or a plurality of virtual objects or augmented reality objects displayed in one or a plurality of virtual worlds or sub-worlds. The invention also unveils a possible concurrent multi-factor approach that comprises biometric means and mainly discloses a new method and system to provide higher digital entropy.

Description of related art

Nowadays, user authentication has become a key challenge for any digital services providers. Different authentication mechanisms and solutions have emerged, relying on one or plural authentication factors (MFA), a factor of authentication being something you know, something you have or something you are.

The concept of graphical passwords has been introduced twenty years ago (Greg E. Blonder, Graphical password, patent US5559961, September 1996) and three-dimensional graphical authentication using virtual objects in virtual environments is currently state-of-the art for recognition-based methods.

Referring to paper "Three-dimensional password for more secure authentication", issued to Fawaz A. Alsulaiman et AI., IEEE Vol. 57, N° 9, September 2008, the publication discloses some of the key concepts used in 3D graphical authentication. More particularly, it discloses design guidelines concerning real-life similarity, object uniqueness and distinction, size of the 3D virtual world, the number of objects and their types and the system importance (what needs to be protected). However, the paper doesn't disclose any methods and techniques to address these guidelines, particularly when it comes to smartphones with limited resources and computation power.

Referring to paper, "Passaction: a new user authentication strategy based on 3D virtual environment", issued to Prasseda K. Gopinadhan, IJCSITS Vol.2, N°. 2, April 2012, the publication discloses a possible embodiment of paper "Three-dimensional password for more secure authentication" Fawaz A. Alsulaiman et AI., where the user has to perform an action on one or a plurality of objects. The system and method proposed contains a password creation stage requiring the selection of a virtual environment from a gallery on a server, which creation results in the creation of linked list containing the "passaction" nodes, the password storage stage and the authentication stage. However, like paper "Three-dimensional password for more secure authentication" Fawaz A. Alsulaiman et AI.", the scientific paper "Passaction" doesn't disclose a method and system to manage thousands or more of virtual objects in the 3D virtual world, how to provide efficient object selection and distinction.

Referring to paper "Network Security - Overcome password hacking through graphical password authentication", issued to P. Kiruthika et al., IJARCSA, Vol. 2, Issue 4, April 2014, the paper summarizes shoulder-surfing methods and their inconveniences and discloses a new technique for graphical authentication based on displaying an image frame containing greyed pictures or symbols, the selection of one or a plurality of grey images constituting the graphical password. However, the scientific paper doesn't disclose a method and system to manage thousands or more of virtual objects in the 3D virtual world, how to use few images while maintaining the digital entropy very high.

Referring to paper "Leveraging 3D Benefits for Authentication", issued to Jonathan Gugary et al., IJNC, 2017, 10, 324-338, the paper unveils some of the key concepts used in graphical authentication and discloses a new authentication method based on the use of spatial memory, episodic memory and context, where the user needs to navigate into a virtual world and perform actions on virtual objects. The set of performed actions and the navigation paths used constitute the user secret. However, the scientific paper doesn't disclose a method and system to manage thousands or more of virtual objects in the 3D virtual world, particularly when it comes to smartphones with limited resources and computation power, while providing a high digital entropy.

Patent WO 2017/218567, "Security approaches for virtual reality transactions", issued to Vishal Anand et al. This patent illustrates an authentication method for a user to perform a secure payment transaction in a virtual environment, by performing a partial biometric authentication.

Patent US 2017/0262855, "System and Method for Authentication and Payment in a Virtual Reality Environment", issued to Vijn Venugopalan et al. This patent illustrates a system and method that authenticates the user via a biometric sensor, allowing the user to access a digital wallet displayed in the virtual environment.

Patent EP3163402, "Method for authenticating an HMD user by radial menu", issued to Vui Huang Tea, this patent illustrates a method for authenticating a user that comprises the mounting of a virtual reality device on the head of the user, the display of steady images containing selectable elements with the virtual reality that can be selected by pointing the head towards the location of one of the selectable elements. This patent presents a password-selection method through head pointing in a virtual reality device.

Patent US-8854178, "Enabling authentication and/or effectuating events in virtual environments based on shaking patterns and/or environmental information associated with real-world handheld devices", issued to Thomas Gross et al. This patent illustrates an authentication method based on shaking a pair of handheld devices.

Patent WO-2014013252, "Pin verification", issued to Justin Pike. This patent illustrates an authentication method based on pin-code entry, where the pin pad may use numbers mixed with images.

Patent US-20130198861, "Virtual avatar authentication", issued to Gregory T. Kishi et al. This patent describes a method for a machine-controlled entity to be authenticated by analysing a set of challenges-responses to get access to a resource.

Patent CN-106203410, "Authentication method and system", issued to Zhong Huaigu et al. This patent illustrates a biometric authentication method based on capturing two images of an iris and performing a match of the final iris image to authenticate the user.

Patent US-8424065, "Apparatus and method of identity and virtual object management and sharing among virtual worlds", issued to Boas Betzler et al, this patent illustrates a system and method to centrally manage credential information and virtual properties across a plurality of virtual worlds.

Patent US-2015/0248547, "Graphical authentication", issued to Martin Philip Riddiford. This patent illustrates an authentication method that displays a first base image containing one or multiple points of interests selected by the user, a second transparent or translucent image overlaying the base image containing an array of password elements such as words, numbers, letters, icons and so forth and where the user can move the secondary image to align one password element with the point of interest displayed on the base image.

Patent US-2017/0372056, "Visual data processing of response images for authentication", issued to Srivathsan Narasimhan, this patent illustrates an authentication method where user must mimic facial expressions showed on at least two images.

Patent US-2009/0046929, "Image-based code", issued to David De Leon. This patent illustrates an authentication method that requires one or a plurality of instructions to construct a first unified image made of subimages. The method mainly proposes to add additional layered images or characters on top of the first unified image to authenticate the user. The method can be particularly complex and tedious as it requires plural instructions to build the first unified image to increase security.

Patent CN-107358074A, "Unlock method and virtual reality devices" issued to Wand Le. This patent illustrates a method to unlock a virtual reality device by selecting one or a plurality of virtual objects in the virtual environment.

Patent CN-104991712A, "Unlocking method based on mobile terminal and mobile terminal", issued to Xie Fang. This patent illustrates an authentication method that requires the user to slide the touch-screen, where the slide operation should unlock points on a rotatable 3D figure.

Patent US-2016/0188865, "3D Pass-Go", issued to Hai Tao. This patent illustrates a method that displays a grid in a 3D space and requires the user to select one or more intersections to compose or form the user's password.

Patent US-2016/188861, "User authentication system and method", issued to Erik Todeschini. This patent illustrates a method and system for authenticating a user that comprises the mounting of a virtual reality device on the head of the user, analysis of the user's gestures to change the form of a 3D shape displayed in the virtual reality device.

Patent EP-2887253, "User authentication via graphical augmented reality password", issued to Mike Scavezze, this patent illustrates a method and system for authenticating a user that comprises the mounting of a virtual reality device on the head of the user and the analysis of the user's movements in a predefined order made at enrolment.

Patent KR-101499350B, "System and method for decoding password using 3D gesture recognition", issued to Kim Dong Ju et al. This patent illustrates a method that authenticates the user by analysing the user's gesture

Patent US-2016/0055330A1, "Three-dimensional unlocking device, three-dimensional unlocking method and program", issued to Koji Morishita et al., This patent illustrates an authentication method based on 3D lock data representing multiple virtual objects that have been arbitrarily arranged in the 3D space and where user needs to perform a selection operation on the virtual objects, in the right order, to get authenticated.

Patent US-2014/0189819, "3D Cloud Lock", issued to Jean-Jacques Grimaud. This patent illustrates an authentication method that project objects in 3D in a randomized way in a fixed scene, where the user needs to manipulate the position of the objects, to retrieve the original objects and their respective positions as defined at enrolment. The method requires to modify the randomized presentation of the objects in a fixed scene and to manipulate the object positions to retrieve the exact objects and positions to undo or solve the randomization.

Patent WO-2013/153099A1, "Method and system for managing password", issued to Pierre Girard et al. This patent illustrates a simple password retrieval mechanism by asking the user to select a first picture in the virtual world, then select a second picture, where the matching of the first and second pictures allows to extract the secret password associated with the first picture and communicate it to the user.

Referring to the patents listed above, none of them discloses a method and/or a system that tells how to manage thousands or more of virtual objects in the 3D virtual world.

Therefore, there is a need to propose an authentication method and system that provides very high digital entropy while maintaining a great user-experience.

Brief summary of the invention

The invention concerns a method and a system for graphically authenticating a user, the user selecting and/or performing meaningful actions on one or plural virtual objects or augmented reality objects contained in a three-dimensional virtual world.

In one preferred embodiment, there is provided a 3D graphical authentication method and system that mainly comprises, an authentication application performed on an electronic device, the display of a 3D virtual world containing virtual objects or augmented reality objects, the selection or action of one or a plurality of virtual objects, which selections and/or actions define the user secret formed by a 3D password; namely those selections and/or actions constitute the entering of the password.

In another preferred embodiment, the method and system can comprise further one or a plurality of biometric authentication modalities such as 3D facial authentication, iris authentication, in-display fingerprint authentication, palm-vein authentication or behavioral authentication that are being performed simultaneously and concurrently to the 3D graphical authentication. For example, if the user owns a smartphone capable of 3D facial authentication like Face ID by Apple (registered Trademark), the method can perform concurrent 3D facial biometric authentication while the user is selecting the virtual objects corresponding to her secret.

The invention particularly addresses unresolved issues in 3D graphical authentication prior art, comprising user-experience personalization, virtual world size and navigability, recall-memory improvement, digital entropy improvement and shoulder-surfing resilience.

According to the invention, is proposed a three-dimensional graphical authentication method for verifying the identity of a user through an electronic device having a graphical display, comprising the steps of:

- receiving an authentication request or launching an application,
- displaying a three-dimensional virtual world containing a plurality of virtual objects or augmented reality objects by using scene graph with geometry instancing and low poly graphics,
- navigating in the three-dimensional virtual world by using a rotatable and scalable scene view,
- selecting one or plural virtual objects and/or performing pre-defined virtual object actions to form a 3D password, the 3D password being made of unique identifiers that correspond to the pre-defined virtual objects and/or actions in the scene graph,
- determining if the formed 3D password matches a 3D password defined at a previous enrolment phase; and
- granting the resource access to the user in case of 3D password matching or rejecting the resource access to the user in case of matching failure.

According to an embodiment, the user can navigate in the said three-dimensional virtual world by using 3D context sensitive teleportation, the teleportation destinations being context sensitive on the current scene view and scale.

According to an embodiment, the said teleportation destination can be a pre-defined position or destination in the selected virtual world or alternatively in another virtual world.

According to an embodiment, each selected virtual object or sub-part of the selected virtual object teleports the user in a local scene representing the selected virtual object or sub-part of the selected virtual object, or in a local scene with an inside view of the selected virtual object. In an embodiment, the application proposes a list of teleportation destination shortcuts.

According to an embodiment, the three-dimensional scene voids the user to navigate directly through virtual objects, and/or void navigating under the 3D virtual world by displaying negative scene angles for real-life similarity purposes.

According to an embodiment, during said selection step, the user performs 3D contextual object selection, comprising using a pointing cursor, displayed or not in the scene, that allows to select virtual objects which are at three-dimensional radar distance of the said pointing cursor. The pointing cursor has preferably a small three-dimensional size of a few pixels to perform accurate object selection.

According to an embodiment, the selection step comprises any well-known selection techniques including but not limited to, single tapping, double tapping, clicking, voice-enabled command or device shaking.

According to an embodiment, during said selection step, said pointing cursor is moved in the scene view or is placed onto a teleportation destination marker or on a virtual object that offers teleporting capabilities to navigate in the virtual world or get teleported to the selected destination.

According to other possible aspects of the invention, to be taken alone or in combination:

- said pointing cursor can display a contextual box that shortly describes the virtual object, the description preferably not unveiling the unique identifier of the said virtual object,
- said contextual box can be used to select the virtual object

- said pointing cursor can display plural contextual boxes in case of multiple possible virtual object selections that are at a three-dimensional radar distance of the said pointing cursor.

According to an embodiment, during said selection step the user applies a pre-defined action on a virtual object, said action representing said 3D password or part of said 3D password.

According to an embodiment, said virtual object action is selected into a displayed list of possible actions into a contextual window. In another alternative, said virtual object action is selected into a separate window or said virtual object action teleports the user in a local scene representing said selected virtual object or sub-part of the selected virtual object, or in a local scene with an inside view of the selected virtual object.

According to an embodiment, said virtual object action is dynamic, requiring the user to take into account one or several dynamic criteria to specify or to define said virtual object action.

According to an embodiment, wherein when performing the selection step, one or several visual, audio and/or haptic effect is further performed comprising but not limited to, displaying a blurred area/contour, displaying a colored contour around the object, displaying a small animation, playing an audio message or vibrating the device.

According to an embodiment, said 3D password matching determination step is performed by using one or a plurality of unique identifiers corresponding to the virtual objects and/or actions performed on these objects, the matching being performed by comparing identifiers used at enrolment and at authentication.

According to an embodiment, previous to the step of displaying a three-dimensional virtual world, a plurality of selectable virtual worlds is first proposed to the user who makes a selection of one three-dimensional virtual world among these selectable three-dimensional virtual worlds. This allows to increase the global digital entropy and offers higher user personalization and areas of interest that provides higher memory-recall.

The invention also concerns a context sensitive authentication method that comprises the 3D graphical authentication method defined in the text, wherein said context sensitive authentication method dynamically determines the level of security required to get authentication accordingly to the nature of the transaction, the security level being represented graphically on the display of the electronic device and indicating to the user how many virtual objects or virtual objects actions are required during the selection step and also possibly during the enrolment phase.

According to an embodiment, during the selection step, a selection order is attached to each selected virtual object and each virtual object action. In a possible embodiment, during the selection step, security icons are displayed, that the user can select and drag onto the virtual object to prior indicate a selection order.

According to an embodiment, wherein said method further comprises an emergency or assistance signalling procedure that comprises the selection of at least one 911 virtual object and/or the implementation of at least one pre-defined emergency action on a virtual object, said procedure being performed at any time during the selection step or the 3D password selection step.

The present invention also concerns a multi-factor authentication method that comprises the 3D graphical authentication method defined in the present text and one or several biometric authentication control(s), each biometric authentication control being performed concurrently to said 3D graphical authentication method. This approach allows to drastically increase the digital entropy or global password space.

Brief Description of the Drawings

The invention will be better understood with the aid of the description of an embodiment given by way of example and illustrated by the figures, in which:

Figure 1 is a schematic diagram of an electronic device such as a smartphone, tablet, personal computer or interactive terminal with a display,

Figure 2 is a flow chart illustrating an exemplary method for authenticating the user according to a simple embodiment of the invention that uses only virtual world and items selection as authentication method,

Figure 3 is a flow chart illustrating an exemplary method for authenticating the user according to another possible embodiment of the invention that uses both virtual world and items selection authentication and one or a plurality of biometric authentication means as authentication method,

Figure 4 illustrates an exemplary screenshot of 3D graphical authentication where the application displays a list of selectable virtual worlds and an overview of the current world selected,

Figure 5 illustrates an exemplary screenshot of 3D graphical authentication where the application displays a list of possible destination areas in one or plural virtual worlds,

Figure 6 illustrates an exemplary screenshot of 3D graphical authentication where the application displays a medium-scaled view of a selected virtual world and a possible embodiment of the 3D context-sensitive teleportation technique,

Figure 7 illustrates an exemplary screenshot of 3D graphical authentication where the application displays a highly-scaled view of a selected virtual world and a possible embodiment of the 3D contextual selection technique,

Figure 8 illustrates an exemplary screenshot of 3D graphical authentication where the application displays a possible embodiment of the dynamic context sensitive authentication technique,

Figure 9 illustrates an exemplary screenshot of 3D graphical authentication where the application displays a possible teleported destination area or sub-world represented in a local scene view,

Figure 10 illustrates an exemplary screenshot of 3D graphical authentication where the application displays a possible embodiment of the dynamic object interaction technique,

Figure 11 illustrates a possible embodiment where 3D facial biometry and graphical authentications must be performed concurrently and where application requires the user to expose his/her face to start the whole authentication process, and

Figure 12 illustrates a possible embodiment where 3D facial biometry and graphical authentications must be performed concurrently and where application requires to start 3D facial biometry authentication first.

Detailed Description of possible embodiments of the Invention

The following description is made for the purpose of illustrating the general principles of the present invention and is not meant to limit the inventive concepts or techniques claimed herein. Preferred and general embodiments of the present disclosure will be described, by way of example only, with reference to the drawings.

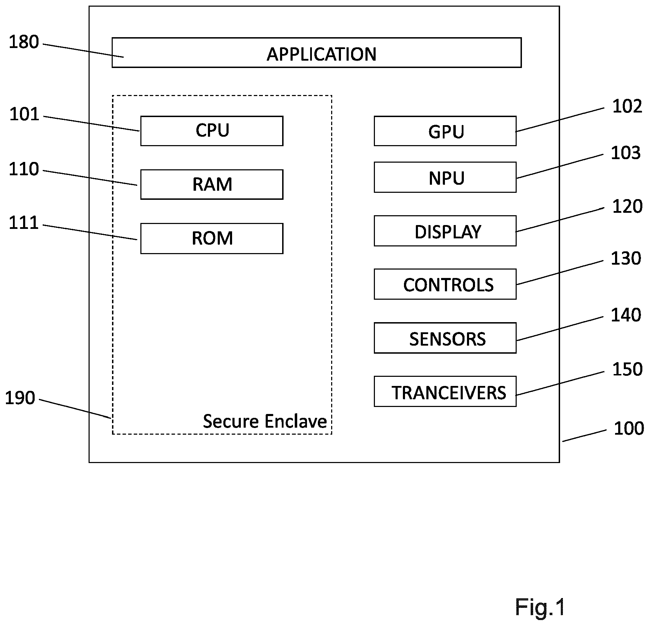

Referring to Figure 1, there is shown an electronic device 100 such as a personal computer, smartphone, tablet computer, television, virtual reality device, interactive terminal or virtual reality device that includes one or plural central processor unit ("CPU") 101, one or plural random access memory ("RAM") 110, one or plural non-volatile memory ("ROM") 111, one or plural display 120, one or plural user controls 130. Depending on the hardware characteristics of the electronic device 100, optional components can be available such as, but not limited to, one or plural graphical processor unit ("GPU") 102, one or plural neural network processor ("NPU") 103, one or plural sensors 140 such as, but not limited to, monochrome or RGB camera, depth camera, infra-red camera, in-display fingerprint sensor, iris sensor, retina sensor, proximity sensor, palm-vein sensor, finger-vein sensor, one or plural transceiver 150, a hardware security enclave 190, such as a Trusted Execution Environment (which can be associated to a Rich Execution Environment), that can protect the central processor unit 101, the random-access memory 110 and the non-volatile memory 111, which security enclave can be configured to protect any other optional hardware components mentioned before. This electronic device 100 can be a mobile equipment.

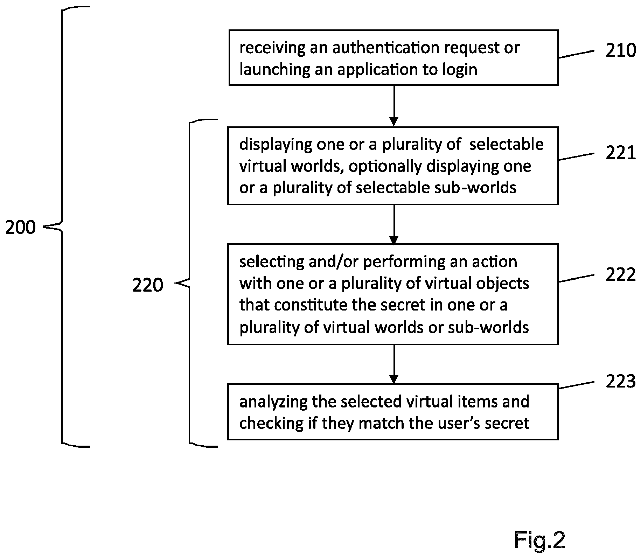

Referring to Figure 2, there is illustrated a simple embodiment of the global authentication method 200. In a first step, an authentication event 210 is received by the application 180 being executed onto the electronic device 100. Upon receiving the authentication triggering event 210 (including an authentication request or the launching application login module), the application 180 starts the 3D graphical authentication 220 method. More precisely, during this 3D graphical authentication 220 method the following steps are implemented: the display of one or plural selectable virtual worlds or sub-worlds 221, the selection or interaction onto one or a plurality of virtual objects 222 contained in the virtual world, which virtual object or virtual objects and/or virtual object action(s) constitute the secret (3D password) defined by the user at enrolment, and the comparison 223 of the virtual object or virtual objects selected with the virtual item or virtual items that have been previously defined at user's enrolment.

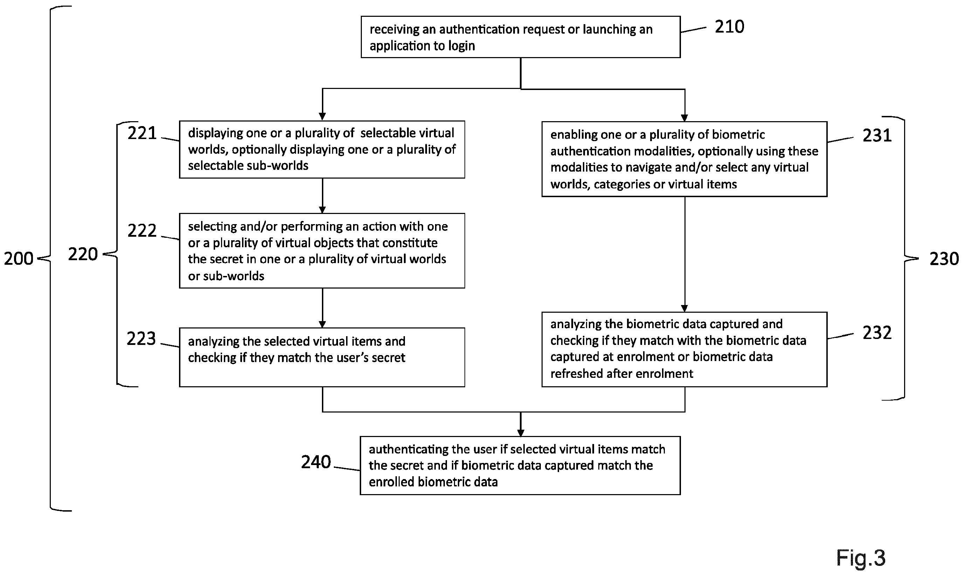

Referring to Figure 3, there is shown another embodiment of the global authentication method 200 that comprises further one or several biometric authentication steps 230 performed in a concurrent way to the 3D graphical authentication 220. The biometric authentication method 230 can be launched immediately upon receiving the authentication request 210 or can be launched at any time during the 3D graphical authentication 220. In another embodiment, the biometric authentication method 230 is performed during the entirety of the 3D graphical authentication method 220 to increase the accuracy of the biometric authentication and/or collect more captured data to improve any machine learning algorithm. The biometric authentication method 230 comprises a step 231 during which one or several biometric authentication step(s) or control(s) are implemented and a step 232 during which the result of the biometric authentication(s) previously performed is then analyzed accordingly to defined scoring thresholds, such as false acceptance rate and/or false rejection rate. Upon the completion of the virtual world authentication method 220 and biometric authentication method 230 (activation phase 231 and matching phase 232), the system can determine a global authentication score, which can be used to determine if the user is authenticated or not. In that situation, after the implantation of both the biometric authentication method 230 and the 3D graphical authentication method 220, a final authentication step 240 is performed through a global authentication analysis module.

The method presented here is called "active background biometry" and should not be confused with sequential biometric authentication methods disclosed in the prior art, where biometric authentication is performed once, upon a specific user action in the 3D virtual world or in a sequential way with other authentication modalities or processes. As an example, rreferring to paper "Three-dimensional password for more secure authentication", issued to Fawaz A. Alsulaiman et Al., IEEE Vol. 57, N° 9, September 2008, there is disclosed a sequential biometric authentication method that typically interacts with a virtual object contained in the 3D virtual world, the virtual object representing a biometric sensor such as a fingerprint reader.

The "active background biometry" method enables two key benefits:

- First, the user-experience is improved as the biometric authentication method 230 is performed in background, concurrently to the 3D graphical authentication method 220 without requiring or by requiring very minimal interaction of the user.

- Second, the approach significantly increases the global password space, therefore the digital entropy, as each concurrent biometric authentication method 230 that is concurrently enabled is directly impacting the global number of possible combinations. As an example, a fraudster might be immediately kicked out at the beginning of the 3D graphical authentication step 220 upon detecting the user is wrong, seriously reducing the possibilities of conducting spoofing attacks.

Referring to paper "Three-dimensional password for more secure authentication", issued by Fawaz Alsulaiman et al, IEEE Vol. 57, N° 9, September 2008, the 3D password space formula is modified as follows:

$$\prod(Lmax, G) = \boldsymbol{g(BA)} * \sum_{n=1}^{n=Lmax} (m + g(AC))^n$$

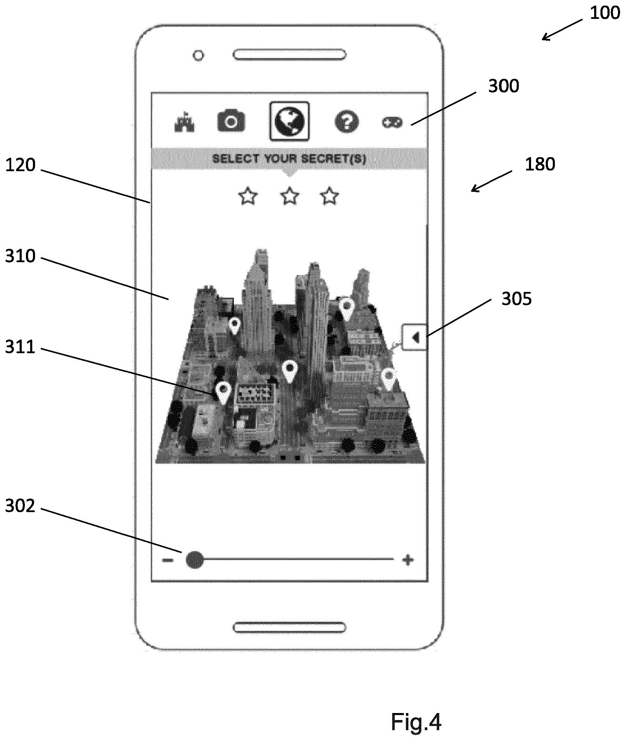

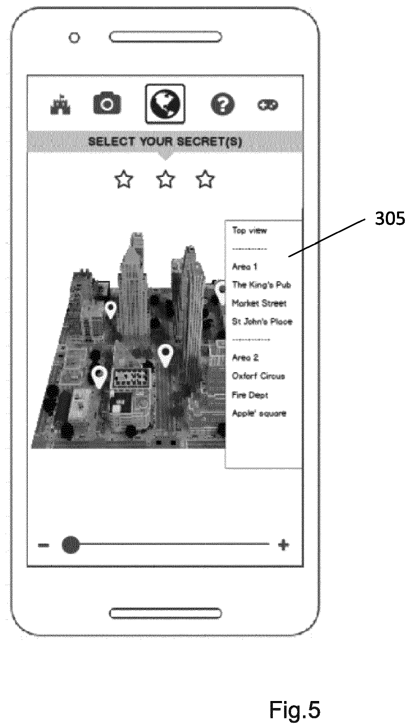

In the above expression, compared to the Fawaz Alsulaiman's formula, the g(BA) is a new factor and represents the total number of authentication combinations offered by the concurrent biometric modalities. As an example, if the total number of possible secret combinations offered by 3D graphical authentication is 1'000'000, and if the total number of biometric combinations is 100'000, then the global password space offered by the global method 200 will be 100'000'000'000.Referring to figures 4 and 5, there is shown a possible embodiment that illustrates a virtual world based on a 3D virtual or reconstructed city, the authentication application 200 running on a regular smartphone forming the electronic device100.

In one general preferred embodiment, the application 180 displays a list of selectable virtual worlds 300, the list 300 being formed of at least one virtual world that contains at least one secret selected by the user at enrolment and other virtual worlds. To increase security, the list of selectable virtual worlds 300 must always contain the same virtual worlds, excepted in case of secret's change by the user. The order of the virtual worlds in the list should be changed at each authentication to void spoofing applications recording user's movements or interactions and replaying sequences to trick the authentication application 180. Many possible graphical user interfaces can be implemented to manage the list of virtual worlds 300, including a variant where the user swipes the screen on left or right to move to another virtual world or a variant where all virtual worlds are displayed on the screen, using a thumbnail representation for each. Optionally, the application 180 can be extended to offer plural sub-world choices to increase the global password space.

**Navigability**

Referring to Figures 4 and 5, to provide a high navigability while displaying a rich virtual world made of many virtual objects, the application 180 displays a three-dimensional, rotatable and scalable virtual world 310. In a possible embodiment, particularly on touch-screen enabled devices 100, the scene view scale 302 can be changed by simply sliding the cursor with one finger, voiding the user to make a zoom with two fingers.

In a possible embodiment, the application 180 can limit the possible pitch values from 0 to 90 degrees, allowing the user's views to range from front-view to top-view, disabling possibilities for the user to navigate under the virtual world for real-life similarity purposes.

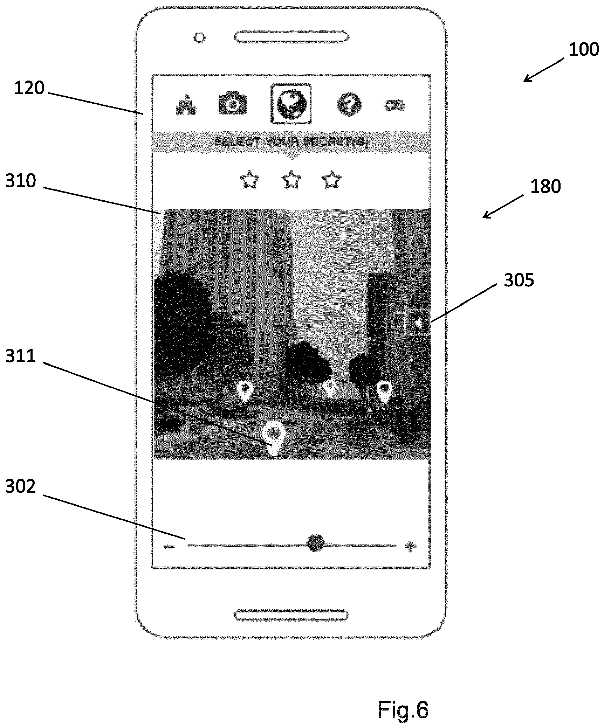

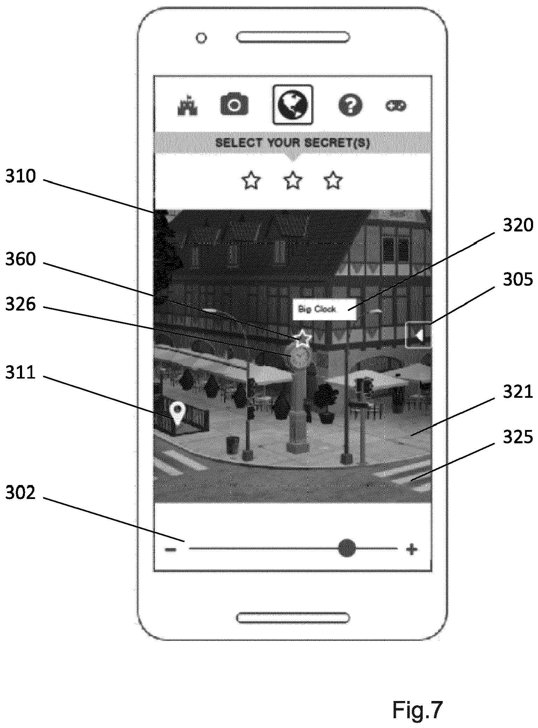

Referring to Figure 4, the method proposes a novel concept called "3D context sensitive teleportation" to easily navigate in the virtual world 310 or optionally in other virtual worlds. In a default embodiment, the application 180 displays one or few context-sensitive teleport destinations 311. Depending on the teleport destination 311 selected by the user, the application 180 can change the global scene view, switch to a new local scene view, rotate the new virtual world, sub-world or object and make a zoom in or zoom out when moving to or when arriving at the selected destination. Contrarily to the current art, the novel concept of 3D context sensitive teleportation doesn't require to target an object by aligning a dot with the targeted object or to navigate through a specific path, as it is the virtual world itself that defines which objects and/ or locations that can be used to teleport the user, depending on the context of the scene view and scale value applied to the virtual world. Referring to Figure 6 and 7, there are showed few possible examples that illustrate teleportation destinations 311.

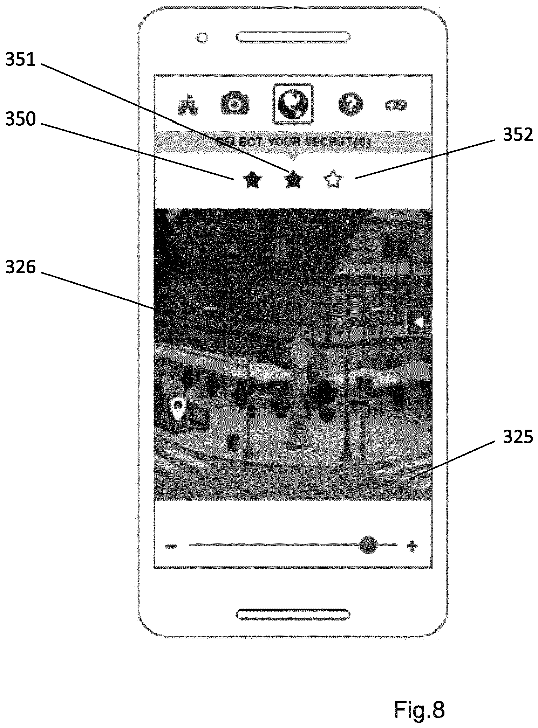

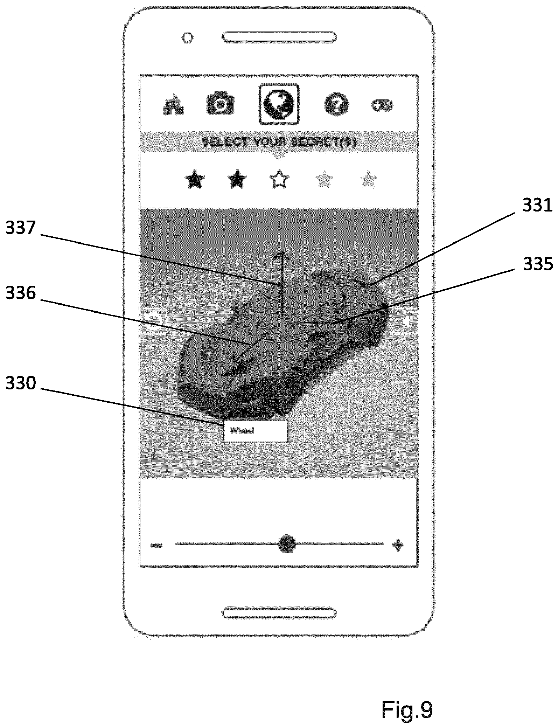

Referring to Figure 9, there is illustrated another aspect of the 3D context-sensitive teleportation concept where the destination is a local scene representing a car 311. In that example, the user has tapped the teleportation marker of a car parked two blocks ahead of the pub displayed in Figure 8. This example shows how powerful is the novel method as it allows by a single tap, screen touch, click or alike to teleport the user in another virtual world or sub-world. The number of teleportation possibilities is virtually infinite and each world or sub-world that the user can be teleported to increases the 3D password space. In that case, back to the Fawaz Alsulaiman's formula, it is the g(AC) parameter that is increased by summing all the virtual world password spaces. However, in a preferred embodiment, limiting the number of sub-levels to two is highly recommended for maintaining ease of use and keeping high memory recall.

Referring to Figure 5, there is illustrated another preferred embodiment that displays destination areas shortcuts 305 (previously hidden in a tab 305 in figure 4), allowing the user to be teleported into pre-defined area of the current selected virtual world or other virtual worlds. For example, the user can select Market Street in area 1 of the current virtual world as the teleportation destination area. This mechanism prevents to display too many teleportation destination markers 311, particularly when it comes to large or very large virtual worlds.

Referring to Figure 6, is shown another example of virtual world 310 displayed on the display 120 of the electronic device through the application 180. In that case, the virtual world 310 is a city after zooming on a street by activating the scene view scale 302. One can see several teleport destinations 311 visible through white markers, and also the tab for destination areas shortcuts 305 (on the left of the screen/display 120.

**Selection of the secret(s)**

Referring to Figure 7, there is illustrated a novel method called "3D contextual object selection" that allows to select a virtual object based on the 3D position of a pointing cursor 360 and the applied scale 302 in the scene view. The novel method disclosed here displays the contextual object box 320 of the virtual object 326 when the virtual object 326 is at a 3D radar distance of the pointing cursor 360. As the 3D radar distance impacts the virtual object 326 selection accuracy, in a default and recommended embodiment, the 3D radar distance value should not exceed few pixels.

In case of the pointing cursor 360 is seeing plural virtual objects at the 3D radar distance, the application 180 will display all the corresponding contextual object boxes 320 of the selectable virtual objects 326 found. In a preferred embodiment, only one virtual object should be selected at a time and the user can directly click the right contextual object box 320 or can move the pointing cursor 360 to see only one selectable virtual object 326 or can change the scale of the scene view 302 by zooming-in as an example.

In another embodiment, the pointing cursor 360 can allow the user to navigate and explore the virtual world without changing the scale 302 of the scene view, and the application 180 should not allow the user to pass through the virtual object 326 for real-life similarity purposes.

To select a virtual object 326, well-known software object selection techniques are used by the application 180 such as single-tapping, double-tapping, maintaining pressure on the virtual object for a while or alike. In case of single or double-tapping action or alike, the position of the pointing cursor 360 is immediately updated in the virtual world 310. Upon stopping touching the screen, single or double-tapping or alike, in a preferred embodiment, the contextual box 320 is no more displayed. To unselect a virtual object, the same techniques can be used and the contextual box 320 can display a message confirming that the virtual object has been unselected.

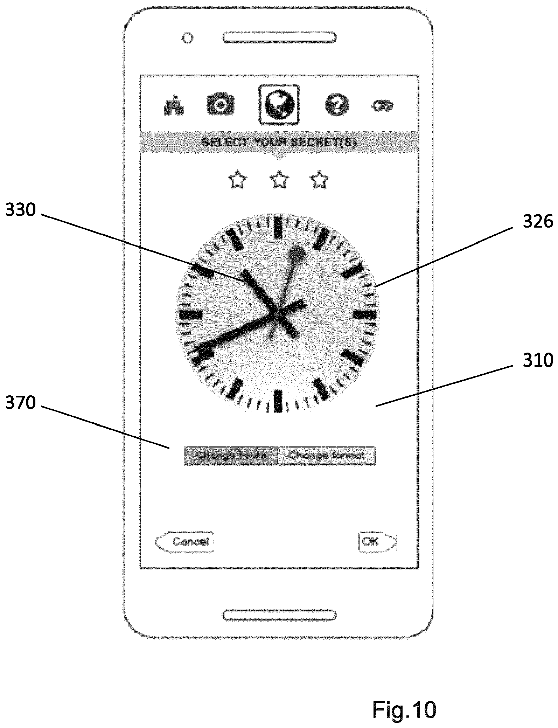

To perform one or plural actions 370 onto a selected virtual object 326, in a preferred embodiment, instead of displaying a list of applicable actions in the contextual window 320, the 3D context-sensitive teleportation mechanism can be used to teleport the user in a local scene showing the virtual object 326, where one or plural actions 370 can be applied. Referring to Figure 10, there is illustrated a local scene that represents the big clock 326 as showed in Figure 7 and 8, where the user can change the hour or the format of the clock 370.

There is disclosed another novel concept called "dynamic object interaction" where the user can specify a secret interaction that must be performed accordingly to the nature of the virtual object and one or plural dynamic criteria. As an example, at enrolment, the user can define that the secret is made by selecting the big clock 326 in Figure 7 and by performing a time change on the clock 326 in the local scene of Figure 10, so that it always corresponds to minus 1 hour and 10 minutes. In a preferred embodiment, the time displayed on the big clock 326 at each authentication is different and the user will have to always adjust the time by moving a selected virtual item (here a hand 330) to minus 1 hour and 10 minutes relatively to the time being displayed on the big clock 326. This approach is particularly powerful as it allows to significantly reduce the attempts of shoulder surfing attacks.

In another embodiment, the digital entropy can be increased by moving a virtual item 331 to a new place in the virtual world 310, the virtual item 330 and the path taken or the final destination in the virtual world 310 constituting the secret.

Referring to Figure 6, there is shown a selected virtual item 331 in a second scene of view where additional attributes and/or actions can be changed or applied to constitute the user's secret and increase the digital entropy. In the example of Figure 6, virtual item 331 is a car that is made of sub-items such as the front-left wheel 332, the hood, the bumper or the roof, which sub-parts can be selected by the user to constitute the secret or a part of the user's secret. Attributes of virtual item 331 or sub-part 332 can be changed as well. In the example of Figure 6, the colour of the virtual item 331, here the car, can be changed. To increase the number of possible combinations constituting the secret, the application can propose applicable actions to the virtual item 331. As an example, in Figure 6, the use can switch on the headlamps in the list of possible actions. In another preferred embodiment of a virtual world using three-dimension space, the application 180 can allow the user changing the position of the selected virtual item 331 in the scene of view by changing the virtual item pitch 337, yaw 335 and/or roll 336 orientations. In that case, the three-dimensional position (x,y,z) of the selected virtual item 331 can be either represented in the original virtual world scene or in the new relative scene as showed in Figure 6. Preferably, the application 180 can use fixed increment values for pitch 337, yaw 335 and roll 336 to void user mistakes when selecting the right orientations that are part of the virtual item secret.

In a preferred embodiment, the application 180 can apply a visual effect on the pointed virtual object 326, such as displaying an animated, semi-transparent border around the virtual object. This method helps the user to void confusing virtual objects, particularly when multiple objects look alike. As an example, in Figure 7, the user may choose the second pedestrian crossing strip 325 or crosswalk tile 321.

The brief description or title of the contextual box 320 should ideally not contain any virtual object identifier to limit shoulder surfing attacks to the maximum possible.

**3D Graphical Matching**

Referring to Figure 2 and 3, the 3D graphical authentication method comprises the matching analysis 223 of the selected virtual objects or interactions. The matching 223 is performed by comparing unique identifiers assigned to each virtual objects or object interactions that are contained in the scene graph. Unlike graphical authentication matching methods unveiled in the prior art, the method proposed here doesn't rely on three-dimensional position analysis.

**Dynamic context sensitive authentication**

Referring to Figure 8, there is illustrated a novel "dynamic context sensitive authentication" approach that indicates to the user the level of security that must be matched to get authenticated. Back to Figure 2 or 3, the application 180 can determine the level of security required to get authenticated upon receiving the authentication request 210. This novel method allows to define a 3D graphical authentication process that is dynamically adapting the security level accordingly to the nature of the transaction. As an example, in a preferred embodiment, a user will be prompted to select only one virtual object secret to login into a software application, whereas a mobile payment of $ 10'000 will require to select three virtual objects and/or apply object interactions.

Back to Figure 8, there is shown an example where the security level for the transaction is maximum, where three virtual objects or interactions must be entered by the user, represented here by three stars 350, 351 and 352. The black stars 350 and 351 tells the user that two virtual objects or interactions have been already entered. The white star 352 tells the user that one remaining virtual object or interaction must be entered to complete the 3D graphical authentication 220.

In another possible embodiment, the application 180 can authorize the user to enter the virtual objects in a not-imposed order. Back to Figure 7, as an example, if the user has defined a secret that is made of the pedestrian crossing strip 325 as first secret then the big clock 326 as a second secret, the user can tap the second white star 352 and move the pointing cursor 360 onto the big clock 326, indicating to the application 180 that the second secret has been entered. In a second step, the user can tap the first white star 351 and move the pointer cursor 360 onto the pedestrian crossing strip 325 to select the first virtual object secret.

**Shoulder surfing attacks**

To overcome shoulder surfing attacks, the 3D graphical authentication method 220 discloses multiple approaches to overcome or limit any shoulder surfing attacks.

In a preferred embodiment, upon single-tapping a virtual object, a short graphical effect on the selected object or around the virtual object selected is applied, such as any blurring effect, applying a colored contour around the object in a furtive and discreet way.

In another preferred embodiment, if the electronic device 100 is haptic enabled, the application 180 can make the electronic device 100 vibrating upon selecting or unselecting virtual objects. Optionally, in case the electronic device 100 is a smartphone or tablet, the application 180 can detect if an earphone has been plugged-in and play audio messages upon navigating, selecting, unselecting virtual object or applying actions on virtual objects when entering the secret.

In another preferred embodiment, the concept of dynamic context interaction as disclosed before can help to significantly reduce shoulder surfing attacks, as it will extremely difficult and time-consuming for a fraudster to discover what is the exact rule that constitutes the interaction secret.

In another embodiment, the method allows the selection of virtual objects that look alike, such as crosswalk tiles 311 or 325, where the display of a virtual world that looks real help the user to memorize exactly the position of the virtual object secret, voiding to display specific markers or clues in the virtual world 310.

**911 Secret**

In another preferred embodiment, the user can define one or several secret virtual objects or actions serving as 911 emergency telephone number or emergency assistance code(s) at enrolment. Optionally, the virtual world itself may contain specific 911 virtual objects that can be made available in any scenes. At any time during a 3D graphical authentication, notably during the 3D password selection step, the user can select one or several of these 911 virtual objects, forming the emergency or 911 secret/3D password, to require emergency assistance in order to signal that he is under duress, for example because an assailant is forcing him to enter the 3D password defined during the previous enrolment phase. As an example, if the user is being hi-jacked while performing a money withdrawal to an ATM (automated teller machine), the user can select one of these 911 virtual objects, which in a preferred embodiment, will immediately block the transaction.

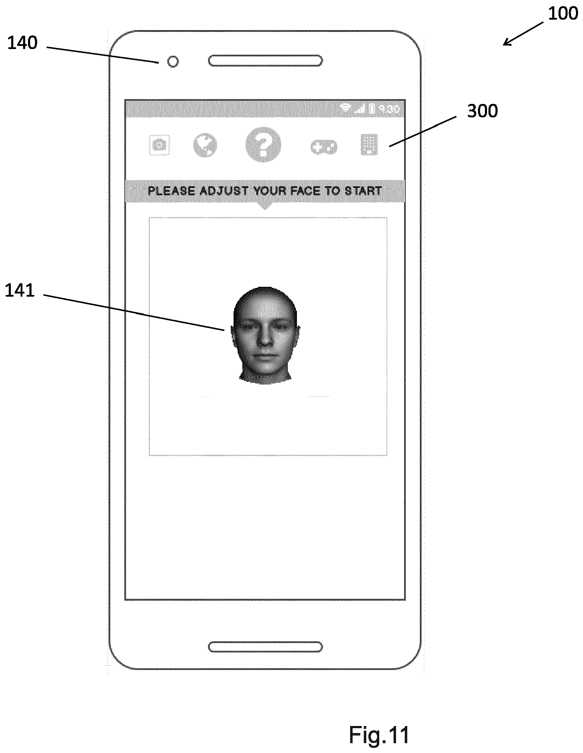

Referring to Figure 11 and 3, there is shown another embodiment where the application 180 has been configured to enable a two-dimensional or three-dimensional biometric authentication 230 prior or during the virtual world selection or virtual items selection 222 As an example, the user may have a smartphone equipped of a depth camera 140 and capable of 3D facial biometric authentication. Upon detecting that the user's face is too far away from the electronic device 100 and depth camera 140, the application 180 can display a message inviting the user to get closer while displaying the monochrome, RGB or depth camera output on screen 120. Upon user's face being closer, the application 180 can propose to select a virtual world 310 among the list 300 proposed. In one embodiment, the biometric authentication steps 231 and 232 can interrupt the virtual world selection steps 221, 222 and 223 if the biometric score doesn't match. In another possible embodiment, the application 180 can wait until the end of both biometric authentication 231 and virtual item secret selection 22 to reject the authentication of the user to void giving any useful information to possible fraudsters.

By extension, such concurrent authentication method can be applied to any other biometric modalities available in the electronic device 100, including but not limited to:

in-display fingerprint biometric modality where each time the user is touching the display, a fingerprint is captured 222, analysed 223 and taken into account into the final authentication step 240 or a fingerprint is captured 222, stored temporarily and fused later with one or other fingerprint captures to create one fused accurate fingerprint that will be used to match with the enrolment fingerprint.

regular fingerprint biometric modality such as Touch ID by Apple or equivalent, where each time the user is touching the fingerprint sensor, in a preferred embodiment, a fingerprint is captured 222, analysed 223 and taken into account into the final authentication step 240 or a fingerprint is captured 222, stored temporarily and fused later with one or other fingerprint captures to create one fused accurate fingerprint that will be used to match with the enrolment fingerprint.

finger-vein or palm-vein biometric modality where each time the user is approaching a finger or palm to the vein sensor 140, in a preferred embodiment, a finger-vein or palm-vein print is captured 222, analysed 223 and taken into account into the final authentication step 240 or a finger-vein or palm-vein print is captured 222, stored temporarily and fused later with one or other finger-vein or palm-vein print captures to create one fused accurate finger-vein or palm-vein print that will be used to match with the enrolment finger-vein or plam-vein print.

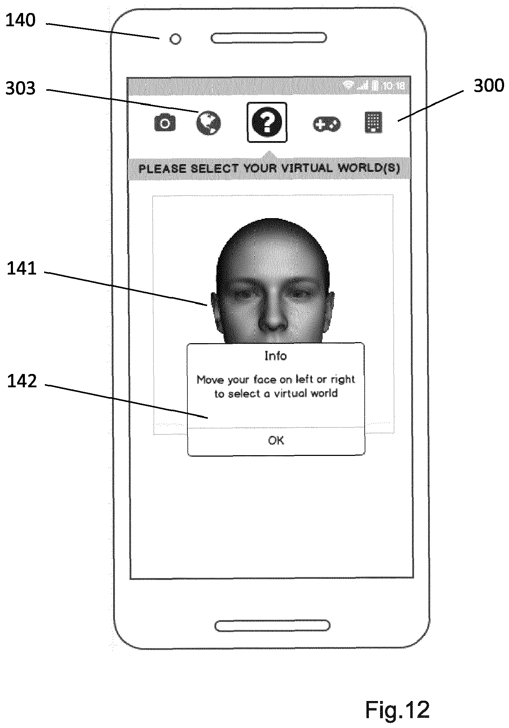

Referring to Figure 12, another possible embodiment for the application 180 is to prompt the user selecting a virtual world among the list 300 by moving head to left and/or right, the head pose being computed and used to point a selectable virtual world in list 300. As an example, the user can move his head on left to select the city virtual world icon 302 that will select the city virtual world 310 showed in Figure 4. The user can then start selecting one or a plurality of virtual items as defined in step 212. During that time, 3D facial authentication step 220 will be processed to optimize speed and improve the user experience

The present invention also concerns a three-dimensional graphical authentication system, comprising :

- an electronic device with a graphical display,
- a processing unit arranged for :

    * receiving an authentication request or launching an application,
    *, displaying on said display a three-dimensional virtual world containing a plurality of virtual objects or augmented reality objects by using scene graph with geometry instancing and low poly graphics,
    * navigating in the three-dimensional virtual world by using a rotatable and scalable scene view of the display,
    *selecting on the display one or plural virtual objects and/or performing pre-defined virtual object actions on the display to form a 3D password, the 3D password being made of unique identifiers that correspond to the pre-defined virtual objects and/or actions in the scene graph,

- a memory for storing the 3D password.

The present invention also concerns a computer program product comprising a computer readable medium comprising instructions executable to carry out the steps of any one of the methods claimed or defined in the present text.

The present invention also concerns an electronic device, such as a mobile equipment, comprising a display and comprising a processing means, and an electronic memory storing a program for causing said processing means to perform any of the method claimed or defined in the present text. In a possible embodiment, said processing unit is equipped with a Trusted Execution Environment and a Rich Execution Environment.

Thanks to the invention described above, are proposed some solutions to deliver higher memory recall, and/or to provide a 911 assistance mechanism, and/or to give a personalized experience at user enrolment and authentication, and/or to provide a context-sensitive authentication method, and/or to use one or a plurality of biometric modalities to increase the digital entropy.

**List of reference signs used in the figures**

| 100 | Electronic device |
| 101 | Central Processor Unit (CPU) |
| 102 | Graphical Processor Unit (GPU) |
| 103 | Neural Network Processor Unit (NPU) |
| 110 | Random Access Memory (RAM) |
| 111 | Non-Volatile Memory (ROM) |
| 120 | Display |
| 130 | Controls (volume, ...) |
| 140 | Sensors (fingerprint reader, depth camera ...) |
| 141 | Camera display |
| 142 | Popup message |
| 150 | Transceivers |
| 180 | Software application |
| 190 | Secure enclave (Trusted Execution Environment...) |
| 200 | Global authentication method |
| 210 | Authentication request or launching application login module |
| 220 | 3D graphical authentication method |
| 221 | Display of selectable virtual worlds or sub-worlds module |
| 222 | Virtual object(s) selection or interaction module |
| 223 | Comparison and match checking module |
| 230 | Biometric authentication method |
| 231 | (Multi-)biometric authentication activation module |
| 232 | (Multi-)biometric authentication matching module |
| 240 | Global authentication analysis module |

| 300 | List of selectable virtual worlds |
|---|---|
| 302 | Scene view scale |
| 303 | Selectable city virtual world |
| 305 | Destination areas shortcut(s) |
| 310 | Display of the selected world and sub-world |
| 311 | Teleport destination(s) |
| 320 | Contextual object box |
| 321 | Virtual object (crosswalk tile) |
| 325 | Virtual object (second pedestrian crossing strip) |
| 326 | Virtual object (big clock) |
| 330 | A selected virtual item (hand) |
| 331 | A selected virtual item (car) |
| 332 | A selected sub-item (wheel) |
| 335 | Virtual item yaw orientation |
| 336 | Virtual item roll orientation |
| 337 | Virtual item pitch orientation |
| 350 | Star |
| 351 | Star |
| 352 | Star |
| 360 | Pointing cursor |
| 370 | Virtual object actions(s) |

**Claims**

1. A three-dimensional graphical authentication method for verifying the identity of a user through an electronic device having a graphical display, comprising the steps of:

   - receiving an authentication request or launching an application,
   - displaying a three-dimensional virtual world containing a plurality of virtual objects or augmented reality objects by using scene graph with geometry instancing and low poly graphics,
   - navigating in the three-dimensional virtual world by using a rotatable and scalable scene view,
   - selecting one or plural virtual objects and/or performing pre-defined virtual object actions to form a 3D password, the 3D password being made of unique identifiers that correspond to the pre-defined virtual objects and/or actions in the scene graph,
   - determining if the formed 3D password matches a 3D password defined at a previous enrolment phase; and
   - granting the resource access to the user in case of 3D password matching or rejecting the resource access to the user in case of matching failure.

2. The method of claim 1, wherein the user can navigate in the said three-dimensional virtual world by using 3D context sensitive teleportation, the teleportation destinations being context sensitive on the current scene view and scale

3. The method of claim 2, wherein the said teleportation destination can be a pre-defined position or destination in the selected virtual world or in another virtual world.

4. The method of claim 2, wherein each selected virtual object or sub-part of the selected virtual object teleports the user in a local scene representing the selected virtual object or sub-part of the selected virtual object, or in a local scene with an inside view of the selected virtual object.

5. The method of any of claims 1 to 4, wherein during said selection step, the user performs 3D contextual object selection, comprising using a pointing cursor, displayed or not in the scene, that allows to select virtual objects which are at three-dimensional radar distance of the said pointing cursor.

6. The method of claim 5, wherein during said selection step, said pointing cursor is moved in the scene view or is placed onto a teleportation destination marker or on a virtual object that offers teleporting capabilities to navigate in the virtual world or get teleported to the selected destination.

7. The method of claim 5, wherein during said selection step the user applies a pre-defined action on a virtual object, said action representing said 3D password or part of said 3D password.

8. The method of claim 7, wherein said virtual object action is selected into a displayed list of possible actions into a contextual window or into a separate window or said virtual object action teleports the user in a local scene representing said selected virtual object or sub-part of the selected virtual object, or in a local scene with an inside view of the selected virtual object The method of claim 7, wherein said virtual object action is dynamic, requiring the user to take into account one or several dynamic criteria to specify said virtual object action.

9. The method of any of claims 1 to 8, wherein said 3D password matching determination step is performed by using one or a plurality of unique identifiers corresponding to the virtual objects and/or actions performed on these objects, the matching being performed by comparing identifiers used at enrolment and at authentication.

10. The method of any of claims 1 to 9, wherein, previous to the step of displaying a three-dimensional virtual world, a plurality of selectable virtual worlds is first proposed to the user who makes a selection of one three-dimensional virtual world among these selectable three-dimensional virtual worlds.

11. A context sensitive authentication method that comprises the 3D graphical authentication method of any of claims 1 to 10, wherein said context sensitive authentication method dynamically determines the level of security required to get authentication accordingly to the nature of the transaction, the security level being represented graphically on the display of the electronic device and indicating to the user how many virtual objects or virtual objects actions are required during the selection step.

12. The method of any of claims 1 to 11, wherein during the selection step, a selection order is attached to each selected virtual object and each virtual object action.

13. The method of any of claims 1 to 12, wherein it further comprises an emergency or assistance signalling procedure that comprises the selection of at least one 911 virtual object and/or the implementation of at least one pre-defined emergency action on a virtual object, said procedure being performed at any time during the selection step.

14. A multi-factor authentication method that comprises the 3D graphical authentication method of any of claims 1 to 13 and one or several biometric authentication control(s), each biometric authentication control being performed concurrently to said 3D graphical authentication method.

15. A three-dimensional graphical authentication system, comprising :

    - an electronic device with a graphical display,
    - a processing unit arranged for :

        * receiving an authentication request or launching an application,
        *, displaying on said display a three-dimensional virtual world containing a plurality of virtual objects or augmented reality objects by using scene graph with geometry instancing and low poly graphics,
        * navigating in the three-dimensional virtual world by using a rotatable and scalable scene view of the display,
        *selecting on the display one or plural virtual objects and/or performing pre-defined virtual object actions on the display to form a 3D password, the 3D password being made of unique identifiers that correspond to the pre-defined virtual objects and/or actions in the scene graph,

    - a memory for storing the 3D password.

180 — APPLICATION

101 — CPU

110 — RAM

111 — ROM

190 — Secure Enclave

GPU — 102

NPU — 103

DISPLAY — 120

CONTROLS — 130

SENSORS — 140

TRANCEIVERS — 150

100

Fig.1

```
200 ─┤

              ┌─────────────────────────────────┐
              │ receiving an authentication request or │── 210
              │ launching an application to login      │
              └─────────────────────────────────┘
                              │
                              ▼
              ┌─────────────────────────────────┐
              │ displaying one or a plurality of  selectable │── 221
              │ virtual worlds, optionally displaying one    │
              │ or a plurality of selectable sub-worlds      │
              └─────────────────────────────────┘
                              │
  220 ─┤                       ▼
              ┌─────────────────────────────────┐
              │ selecting and/or performing an action │── 222
              │ with one or a plurality of virtual objects │
              │ that constitute the secret in one or a     │
              │ plurality of virtual worlds or sub-worlds  │
              └─────────────────────────────────┘
                              │
                              ▼
              ┌─────────────────────────────────┐── 223
              │ analyzing the selected virtual items and │
              │ checking if they match the user's secret │
              └─────────────────────────────────┘
```

Fig.2

```
receiving an authentication request or launching an          210
application to login
```

221 — displaying one or a plurality of selectable virtual worlds, optionally displaying one or a plurality of selectable sub-worlds

231 — enabling one or a plurality of biometric authentication modalities, optionally using these modalities to navigate and/or select any virtual worlds, categories or virtual items

222 — selecting and/or performing an action with one or a plurality of virtual objects that constitute the secret in one or a plurality of virtual worlds or sub-worlds

223 — analyzing the selected virtual items and checking if they match the user's secret

232 — analyzing the biometric data captured and checking if they match with the biometric data captured at enrolment or biometric data refreshed after enrolment

240 — authenticating the user if selected virtual items match the secret and if biometric data captured match the enrolled biometric data

200 · 220 · 230

Fig.3

Fig.4

Fig.5

100

120

310

180

305

311

302

SELECT YOUR SECRET(S)

Fig.6

Fig.7

Fig.8

Fig.9

SELECT YOUR SECRET(S)

330

326

370

310

Change hours | Change format

Cancel    OK

Fig.10

PLEASE ADJUST YOUR FACE TO START

Fig.11

140

303

300

PLEASE SELECT YOUR VIRTUAL WORLD(S)

141

**Info**

Move your face on left or right
to select a virtual world

142

OK

Fig.12

Europäisches
Patentamt

European
Patent Office

Office européen
des brevets

**EUROPEAN SEARCH REPORT**

Application Number

EP 18 15 4061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/096196 A1 (O'CONNOR NEIL [IE] ET AL) 3 April 2014 (2014-04-03) * paragraphs [0010] - [0012], [0022] - [0068]; figures 3, 4 * | 1-15 | INV. G06F21/36 |
| A | Anonymous: "Low poly - Wikipedia", , 11 September 2017 (2017-09-11), XP055493790, Retrieved from the Internet: URL:https://en.wikipedia.org/w/index.php?title=Low_poly&oldid=800063462 [retrieved on 2018-07-19] * the whole document * | 1-15 | |
| X | US 2014/150085 A1 (FURUICHI SANEHIRO [JP] ET AL) 29 May 2014 (2014-05-29) * paragraphs [0006], [0007], [0019] - [0126] * | 1-15 | |
| X | JONATHAN GURARY ET AL: "Leveraging 3D Benefits for Authentication", INTERNATIONAL JOURNAL OF COMMUNICATIONS, NETWORK AND SYSTEM SCIENCES, vol. 10, no. 08, 4 September 2017 (2017-09-04), pages 324-338, XP055493945, US ISSN: 1913-3715, DOI: 10.4236/ijcns.2017.108B035 * Sections 1-4 * | 1-15 | TECHNICAL FIELDS SEARCHED (IPC) G06F |

-/--

The present search report has been drawn up for all claims

| Place of search | Date of completion of the search | Examiner |
|---|---|---|
| Munich | 24 July 2018 | Winkelbauer, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 15 4061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALSULAIMAN F A ET AL: "Three-Dimensional Password for More Secure Authentication", IEEE TRANSACTIONS ON INSTRUMENTATION AND MEASUREMENT, IEEE SERVICE CENTER, PISCATAWAY, NJ, US, vol. 57, no. 9, 1 September 2008 (2008-09-01), pages 1929-1938, XP011226123, ISSN: 0018-9456, DOI: 10.1109/TIM.2008.919905 * Sections I-III * ----- | 1-15 | |

TECHNICAL FIELDS
SEARCHED (IPC)

The present search report has been drawn up for all claims

| Place of search | Date of completion of the search | Examiner |
|---|---|---|
| Munich | 24 July 2018 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 4061

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2018

| Patent document cited in search report | | Publication date | Patent family member(s) | Publication date |
|---|---|---|---|---|
| US 2014096196 | A1 | 03-04-2014 | BR 102013016666 A2 | 28-07-2015 |
| | | | CN 103714274 A | 09-04-2014 |
| | | | EP 2713299 A1 | 02-04-2014 |
| | | | JP 2014071889 A | 21-04-2014 |
| | | | PH 12013000168 A1 | 02-02-2015 |
| | | | US 2014096196 A1 | 03-04-2014 |
| US 2014150085 | A1 | 29-05-2014 | JP 2014106813 A | 09-06-2014 |
| | | | US 2014150085 A1 | 29-05-2014 |

EPO FORM P0459

For more details about this annex : see Official Journal of the European Patent Office, No. 12/82

# EP 3 518 130 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5559961 A
- WO 2017218567 A
- US 20170262855 A
- EP 3163402 A
- US 8854178 B
- WO 2014013252 A
- US 20130198861 A
- CN 106203410
- US 8424065 B
- US 20150248547 A
- US 20170372056 A
- US 20090046929 A
- CN 107358074 A
- CN 104991712 A
- US 20160188865 A
- US 2016188861 A
- EP 2887253 A
- KR 101499350 B
- US 20160055330 A1
- US 20140189819 A
- WO 2013153099 A1

### Non-patent literature cited in the description

- **FAWAZ A. ALSULAIMAN et al.** Three-dimensional password for more secure authentication. IEEE, September 2008, vol. 57
- **PRASSEDA K. GOPINADHAN.** Passaction: a new user authentication strategy based on 3D virtual environment. *IJCSITS,* April 2012, vol. 2 (2
- **FAWAZ A. ALSULAIMAN.** *Three-dimensional password for more secure authentication*
- **P. KIRUTHIKA et al.** Network Security - Overcome password hacking through graphical password authentication. *IJARCSA,* April 2014, vol. 2 (4
- **JONATHAN GUGARY et al.** Leveraging 3D Benefits for Authentication. *IJNC,* 2017, vol. 10, 324-338
- **FAWAZ ALSULAIMAN et al.** Three-dimensional password for more secure authentication. IEEE, September 2008, vol. 57